(19) Europäisches Patentamt
European Patent Office
Office européen des brevets

(11) **EP 2 932 635 B1**

(12) **EUROPÄISCHE PATENTSCHRIFT**

(45) Veröffentlichungstag und Bekanntmachung des Hinweises auf die Patenterteilung:
**17.06.2020 Patentblatt 2020/25**

(21) Anmeldenummer: **13802333.8**

(22) Anmeldetag: **04.12.2013**

(51) Int Cl.:
**H04J 3/06** (2006.01)     **H04L 12/40** (2006.01)

(86) Internationale Anmeldenummer:
**PCT/EP2013/075555**

(87) Internationale Veröffentlichungsnummer:
**WO 2014/090658 (19.06.2014 Gazette 2014/25)**

(54) **ZUWEISEN VON ZEITSTEMPELN ZU EMPFANGENEN DATENPAKETEN**

ASSIGNING TIMESTAMPS TO RECEIVED DATA PACKETS

ATTRIBUTION D' HORODATAGE AUX PACQUETS DE DONNÉES RECUS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.12.2012 DE 102012222881**

(43) Veröffentlichungstag der Anmeldung:
**21.10.2015 Patentblatt 2015/43**

(73) Patentinhaber: **Bayerische Motoren Werke Aktiengesellschaft**
**80809 München (DE)**

(72) Erfinder:
• **BARTSCH, Armin**
  **80634 München (DE)**
• **KLANNER, Felix**
  **639664 Singapore (SG)**
• **KLÖDEN, Horst**
  **80797 München (DE)**
• **RAUCH, Andreas**
  **85777 Kammerberg (DE)**

(56) Entgegenhaltungen:
**US-B2- 6 839 659**

• **GANERIWAL S ET AL: "Estimating Clock Uncertainty for Efficient Duty-Cycling in Sensor Networks", IEEE / ACM TRANSACTIONS ON NETWORKING, IEEE / ACM, NEW YORK, NY, US, Bd. 17, Nr. 3, 1. Juni 2009 (2009-06-01), Seiten 843-856, XP011248103, ISSN: 1063-6692**
• **TOBIAS HUCK ET AL: "Precise timestamping and temporal synchronization in multi-sensor fusion", INTELLIGENT VEHICLES SYMPOSIUM (IV), 2011 IEEE, IEEE, 5. Juni 2011 (2011-06-05), Seiten 242-247, XP031998982, DOI: 10.1109/IVS.2011.5940472 ISBN: 978-1-4577-0890-9 in der Anmeldung erwähnt**

**Beschreibung**

Die Erfindung betrifft ein Verfahren zum Zuweisen eines Zeitstempels zu einem betrachteten empfangenen Datenpaket, eine entsprechende Vorrichtung und ein entsprechendes Computerprogramm.

Heutige Fahrzeuge verfügen gelegentlich über Fahrerassistenzsysteme, die vielfältige Funktionen wie Notbremsungen oder die Erkennung von Fahrstreifen bereitstellen. Ebenso bestehen Überlegungen durch zentrale Verarbeitungseinheiten in Fahrzeugen Umfeldmodelle errechnen zu lassen, die wiederum als Ausgangsdaten für Fahrerassistenzsysteme dienen können. Zu diesen Zwecken sind in Fahrzeugen Sensoren vorgesehen, die Messungen der Eigenschaften der Umgebung des Fahrzeugs oder des Fahrzeugs selbst vornehmen. Die Messdaten der Sensoren werden typischerweise über einen Bus, wie einen CAN Bus, von den Sensoren zu der oder den verarbeitenden Einheiten übertragen.

Da sich die Umgebung eines Fahrzeugs in aller Regel bei der Benutzung ändert, weil sich das Fahrzeug oder andere Verkehrsteilnehmer bewegen, ist bei der Verarbeitung der Messdaten der Zeitpunkt, zu dem die Messdaten von dem Sensor erfasst wurden, von Bedeutung. Die Sensormessung bezieht sich dann nämlich auf die Umgebung, wie sie zu einem bestimmten Zeitpunkt bestand. Für einen anderen Zeitpunkt hat die Sensormessung nur verringerte oder sogar keine Aussagekraft.

Aus diesem Grund ist es generell wünschenswert, zu einer Messung eines Sensors auch die Zeit anzugeben, zu der diese ausgeführt wurde. Eine Angabe dieser Art wird als Zeitstempel bezeichnet. Dabei ist es wesentlich, dass auf zuverlässige Art durch die Verarbeitungseinheit der Zeitpunkt der Messung in ihrer eigenen Zeitfortschreibung bestimmt werden kann, da auf dieser Basis die Verarbeitung der Messdaten stattfindet und da meist nur diese in Bezug zur realen Umgebung des Fahrzeugs gesetzt werden kann. Besondere Relevanz erfährt diese Anforderung bei der Verknüpfung beziehungsweise Fusion von Daten mehrerer Sensoren. Ohne eine zeitliche Einordnung der Daten mehrerer Sensoren zueinander ist deren gemeinsame Verarbeitung nicht sinnvoll möglich.

Häufig jedoch sind Sensoren nicht dazu eingerichtet zu den ausgegebenen Messdaten auch einen Zeitstempel oder eine zweckähnliche Angabe auszugeben, mit deren Hilfe die Verarbeitungseinheit zuverlässig den Zeitpunkt der Messung feststellen könnte. Selbst wenn ein Sensor über eine für die Erstellung eines Zeitstempel generell geeignete Zeitfortschreibung verfügt, so ist diese meist nicht mit der für die Verarbeitung wesentlichen Zeitfortschreibung der Verarbeitungseinheit synchronisiert und oft Fehlern ausgesetzt wie einer Drift. Im Ergebnis kann deshalb von den meisten Sensoren kein verwendbarer Zeitstempel für ihre Messdaten bereitgestellt werden.

Ein offensichtlicher Lösungsansatz trotzdem Zeitstempel für die an der Verarbeitungseinheit eingehenden Sensordaten bereitzustellen, ist es, den jeweiligen Sensordaten deren Ankunftszeit an der Verarbeitungseinheit als Zeitstempel zuzuweisen. Dieses Vorgehen hat jedoch nicht nur den Nachteil, dass der zugewiesene Zeitstempel einen Zeitpunkt angibt, der generell gegenüber dem Zeitpunkt der echten Messung verzögert ist, sondern auch, dass die Verzögerung in der Praxis nicht konstant ist. Letzteres beruht darauf, dass die Laufzeit eines Datenpakets vom Sensor bis zur Verarbeitungseinheit verschiedenen zufälligen Einflüssen, wie Auslastungen des auch von anderen unabhängigen Teilnehmern genutzten Übertragungsbusses, Scheduling der Verarbeitungseinheit oder von zwischengeschalteten Puffern oder anderen vergleichbaren Einflüssen ausgesetzt ist. Die Übertragungszeit unterliegt damit Fluktuationen, auch Jitter genannt. Abhängig von dem Zweck der Sensordaten, der Frequenz der Messungen des Sensors oder inwieweit die Verwendung zeitkritisch ist, kann dieser Jitter dazu führen, dass die empfangenen Sensordaten basierend auf einem derart bestimmten Zeitstempel nur eingeschränkt oder gar nicht verwendbar sind.

Ausgehend von dem oben dargestellten Lösungsansatz sind im Stand der Technik Verfahren vorgeschlagen worden, mit denen auf verbesserte Art Zeitstempel für Sensoren bestimmt werden können, die Messungen und Ausgaben von Sensordaten zumindest annähernd zyklisch durchführen. Aufgrund des häufigen Einsatzes derartiger Sensoren sind diese Verfahren weithin anwendbar.

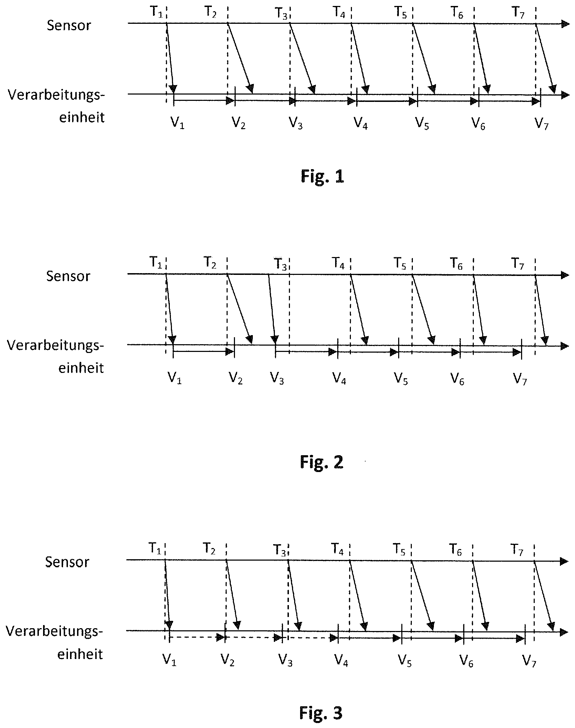

In der Veröffentlichung "Precise Timestamping and Temporal Syhchronization in Multi-Sensor Fusion", Tobias Huck et al., Intelligent Vehicles Symposium (IV), 2011, IEEE, Seiten 242 bis 247 wird ein derartiges Verfahren detailliert vorgestellt. Gemäß diesem wird die Zyklizität der Sensormessungen ausgenutzt um durch Beobachtung mehrerer Zyklen (mithilfe der Ankunftszeiten empfangener Datenpakete) auf die Zykluszeit des Sensors rückzuschließen beziehungsweise diese zu schätzen. Tatsächlich kommt hierfür ein Kalmannfilter zum Einsatz. Der Zeitstempel, der einem Datenpaket dann zugewiesen wird, wird folgendermaßen bestimmt: Es wird ausgehend von der Ankunftszeit des Datenpakets, das die kürzeste von der Verarbeitungseinheit bestimmte Laufzeit aufweist (der sogenannte Anker), anhand eines Multiplen der geschätzten Zykluszeit einem diesem Datenpaket nachfolgenden Datenpaket ein Zeitstempel zugewiesen. Auf diese Weise kommt die beste verfügbare Näherung des tatsächlichen Messzeitpunkts des Sensors (nämlich die Ankunftszeit des Pakets mit der kürzesten Laufzeit) allen nachfolgenden Datenpaketen zugute. Die zugewiesenen Zeitstempel sind darüber hinaus von Fluktuationen der Größe eines Jitters befreit. Weitere Erklärungen hierzu sind im Abschnitt "Algorithm II" der genannten Veröffentlichung gegeben. Fig. 1 gibt noch einmal schematisch das Prinzip wieder. Der Sensor führt Messungen durch, die idealerweise dem

durch $T_1$, $T_2$, ... dargestellten Zyklus folgen und sendet darauf basierend Datenpakete an die Verarbeitungseinheit. Diese Datenpakte durchlaufen eine Verzögerung (dargestellt durch die nach unten weisenden Pfeile) und erreichen die Verarbeitungseinheit zu einem Ankunftszeitpunkt. Das Datenpaket mit der kürzesten Laufzeit ist hier das Datenpaket, das zu $T_1$ gesendet wurde. Die Ankunftszeit dieses Datenpaketes bildet den Anker (anders ausgedrückt: der Anker wird gesetzt). Für dieses Datenpaket ist die Ankunftszeit gleich dem Zeitstempel, hier $V_1$. Basierend auf diesem Anker werden die Zeitstempel $V_1$, $V_2$, $V_3$ ... zugewiesen. Dabei wird ausgehend von $V_1$ für jedes nachfolgende Datenpaket die geschätzte Zykluszeit (dargestellt durch die horizontalen Pfeile) hinzuaddiert. In diesem Beispiel soll angenommen werden, dass die Zykluszeit fehlerfrei geschätzt wird. Wie direkt ersichtlich ist, sind die zugewiesenen Zeitstempel $V_2$, $V_3$, ... stets früher als die tatsächliche Ankunftszeit der Datenpakete und damit bessere Schätzungen für den tatsächlichen Messzeitpunkt des Sensors.

Das in der oben genannten Veröffentlichung offenbarte Verfahren lässt allerdings zwei Aspekte unberücksichtigt, die zu ungenau zugewiesenen Zeitstempeln führen können. Der erste Aspekt betrifft den Fall, dass der Sensor gegebenenfalls aufgrund temporärer äußerer Einflüsse eine einzelne Messung (oder eine Gruppe von Messungen) im Vergleich zu seinem Zyklus früher ausführt. Ein Problem entsteht dann, wenn der Sensor eine Messung zu einem derart frühen Zeitpunkt ausführt, dass die Ankunftszeit des daraus resultierenden Datenpakets vor dem Zeitpunkt liegt, zu dem in seinem normalen Zyklus Messungen stattfinden, und wenn der Sensor dann zu diesem ursprünglichen Zyklus zurückkehrt. In einem solchen Fall liegen die zugewiesenen Zeitstempel für alle folgenden Messungen vor dem tatsächlichen Messzeitpunkt und sind damit falsch. Fig. 2 illustriert dieses Phänomen schematisch aufbauend auf dem Schema der Fig. 1 unter der Annahme einer fehlerfreien Schätzung der Zykluszeit. Die Messung des Sensors, die eigentlich zum Zeitpunkt $V_3$ auszuführen wäre, wird verfrüht ausgeführt. Das darauf basierende Datenpaket erreicht die Verarbeitungseinheit vor dem Zeitpunkt $V_3$ und gleichzeitig als das Datenpaket mit der kürzesten Laufzeit gemäß dem Algorithmus der oben genannten Veröffentlichung. Die Ankunftszeit dieses Datenpakets ($V_3$) wird daraufhin der neue Anker des Verfahrens (anders ausgedrückt: der Anker wird neu gesetzt). Für dieses Datenpaket und für zukünftige Datenpakete wird der zugewiesene Zeitstempel ausgehend von diesem Anker berechnet. Wie ersichtlich ist, sind die zugewiesenen Zeitstempel $V_3$, $V_4$, $V_5$ ... zu früh im Vergleich zu den tatsächlichen Messzeitpunkten und auch ihr absoluter Fehler im Vergleich zu den tatsächlichen Messzeitpunkten ist größer als zuvor für $V_1$ und $V_2$. Gemäß dem Algorithmus der oben genannten Veröffentlichung wird diese zu frühe Platzierung des Ankers nicht korrigiert.

Der zweite Aspekt betrifft den Fall des Zuweisens von Zeitstempeln zu Datenpaketen kurz nach dem Starten des Systems, wenn die Zykluszeit des Sensors noch nicht zuverlässig, also (im Wesentlichen) fehlerfrei, bestimmt ist. Wird für die Zykluszeit eines Sensors beispielsweise eine zu kurze Zeitdauer angenommen, die erst nach einer größeren Zahl von empfangenen Datenpaketen auf den richtigen Wert einschwingt, so kann hier ebenfalls eine zu frühe Platzierung des Ankers auftreten. Fig. 3 verdeutlicht diesen Fall schematisch aufbauend auf dem Schema der Fig. 1. Zum Zweck der Verdeutlichung soll hier angenommen werden, dass die Zykluszeit des Sensors zu Anfang um knapp 9% zu kurz geschätzt wird und diese Schätzung 3 Zyklen lang nicht korrigiert wird. Nach den drei zu kurzen Schätzungen soll zum Zweck der Erläuterung angenommen werden, dass die Zykluszeit direkt korrekt geschätzt wird. Die zu kurz geschätzte Zykluszeit wird in Fig. 3 durch horizontale gestrichelte Pfeile dargestellt. Ab der vierten Zykluszeit wird die Zykluszeit wieder richtig geschätzt (Darstellung wieder durch durchgehende horizontale Pfeile). Wie ersichtlich ist, wird der Anker mit den Datenpaketen die auf Messungen zu den Zeitpunkten $T_2$ und $T_3$ basieren weiter nach vorne geschoben, bis er früher als der jeweils tatsächliche Messzeitpunkt liegt. Gemäß dem Algorithmus der oben genannten Veröffentlichung wird diese zu frühe Platzierung des Ankers nicht korrigiert. Der absolute Fehler der zugewiesenen Zeitstempel im Vergleich zum tatsächlichen Messzeitpunkt ist größer als der ursprünglich für das erste Datenpaket bestimmte ($V_1$).

Das Patent US6839659 B2 (TARASSENKO LIONEL [GB] ET AL), 4. Januar 2005, offenbart ein weiteres Verfahren zum Zuweisen eines Zeitstempels gemäß dem Oberbegriff des Anspruchs 1. Aufgabe der Erfindung ist es, eine zu frühe Platzierung des Ankers zu erkennen und zu korrigieren.

Die Aufgabe wird durch ein Verfahren nach Anspruch 1, eine Vorrichtung nach Anspruch 8, ein Fahrzeug nach Anspruch 9 und ein Computerprogramm nach Anspruch 10 gelöst. Vorteilhafte Weiterbildungen sind in den abhängigen Ansprüchen definiert.

In einem Aspekt umfasst ein Verfahren zum Zuweisen eines Zeitstempels zu einem betrachteten Datenpaket, das ebenso wie eine Gruppe empfangener Datenpakete von einem zyklisch arbeitenden Sensor empfangen wird, wobei das betrachtete Datenpaket insbesondere in der Gruppe empfangener Datenpakete umfasst ist: Bestimmen der Ankunftszeit für jedes Datenpaket der Gruppe von empfangenen Datenpaketen; Zuweisen eines Zeitstempels zu jedem Datenpaket der Gruppe von Datenpaketen, insbesondere basierend auf der Ankunftszeit eines vor dem betrachteten Datenpaket empfangenen Datenpakets; Bestimmen des Zeitunterschiedes zwischen der bestimmten Ankunftszeit und dem zugewiesenen Zeitstempel für jedes Datenpaket der Gruppe von Datenpaketen; Bestimmen des kleinsten Zeitunterschiedes aus den bestimmten Zeitunterschieden; Zuweisen eines Zeitstempels zu dem betrachteten Datenpaket basierend auf der Ankunftszeit, die für das Datenpaket bestimmt wurde, für das der kleinste Zeitunterschied bestimmt wurde.

Bei der Zuweisung des Zeitstempels zu dem betrachteten Datenpaket wird also die Ankunftszeit von mehreren Datenpaketen berücksichtigt. In den bisher bekannten Verfahren wurde als Anker für die Bestimmung des Zeitstempels stets nur eine einzige Ankunftszeit berücksichtigt, nämlich die bis dahin früheste bezogen auf den Zyklus des Sensors. Wenn diese früheste Ankunftszeit allerdings nicht repräsentativ für die tatsächlichen Messzeitpunkte ist, lässt sich der entstandene Fehler nicht mehr korrigieren. Gemäß dem hier vorgestellten Verfahren wird nach einer Bestätigung für den bestehenden Anker und damit eine einmal aufgetretene frühe Ankunftszeit gesucht. Die Suche bezieht dabei eine Gruppe von empfangenen Datenpaketen ein, also mehrere Datenpakete. Falls keine Bestätigung gefunden wird, wird für das betrachtete Datenpaket der Anker neu gesetzt, und zwar auf die Ankunftszeit mit dem kleinsten Zeitunterschied. Dieser neue Anker kann auch für Zuweisungen von Zeitstempeln für nachfolgend empfangene Datenpakete verwendet werden.

Zu weiterer Erläuterung soll hier der typischerweise auftretende Fall diskutiert werden, dass die Ankunftszeit der Datenpakete der Gruppe nach dem jeweils zugewiesenen Zeitstempel liegt. In einer typischen Implementierung sind dann die Zeitunterschiede alle größer Null. In diesem Fall wird der Anker zur Bestimmung des Zeitstempels auf die Ankunftszeit des Datenpakets gesetzt, das eine Ankunftszeit aufweist, die am wenigsten später liegt, als der auf dem bisherigen Anker bestimmte Zeitstempel. Es wird eine Korrektur des Ankers möglich, falls dieser im Vergleich zu den tatsächlichen zyklischen Messzeitpunkten des Sensors zu früh gesetzt war. Wenn der kleinste Zeitunterschied hingegen Null ist, wird der bisherigen Anker bestätigt. Das folgende Zuweisen der Ankunftszeit auf dem "neuen Anker" ändert dann an den weiter zugewiesenen Zeitstempeln nichts gegenüber dem "alten Anker".

Die Korrektur findet aufgrund der Betrachtung einer Gruppe, typischerweise einer größeren Menge von Datenpaketen, beispielsweise 10, 100 oder 1000 Datenpaketen, statt. Eine Gruppe von Datenpaketen muss nicht notwendigerweise alle unmittelbar aufeinanderfolgend empfangenen Datenpakete enthalten, sondern kann auch nur jedes zweite, dritte oder zufällig ausgewählte Datenpaket der aufeinanderfolgend empfangenen Datenpakete umfassen. Der kleinste Zeitunterschied kann sich auf den Betrag des Zeitunterschiedes beziehen.

Es kann vorgesehen sein, dass bis auf die letzten beiden Schritte (Bestimmen des kleinsten Zeitunterschiedes und Zuweisen eines Zeitstempels zu dem betrachteten Datenpaket), alle Schritte des Verfahrens in Einzelschritten für jedes (oder jedes zweite, dritte oder zufällig gewählte) empfangene Datenpaket ausgeführt werden, was jeweils ein Unterfall der Schritte des Verfahrens (bis auf die letzten beiden Schritte) ist. Insbesondere wird also jedem Datenpaket bei dessen Empfang der an der Verarbeitungseinheit ein Zeitstempel zugewiesen.

Weiterhin kann vorgesehen sein, das Verfahren für eine neue Gruppe von Datenpaketen auszuführen. Darüber hinaus kann vorgesehen sein, die Ankunftszeit, die für das Datenpaket bestimmt wurde, für das der kleinste Zeitunterschied bestimmt wurde, als Anker zur Bestimmung von Zeitstempeln von nachfolgenden Datenpaketen zu verwenden.

In einer vorteilhaften Weiterbildung kann vorgesehen sein, für das betrachtete Datenpaket einen adaptierten Zeitstempel zu bestimmen. Für diesen adaptierten Zeitstempel wird eine minimale Verarbeitungszeit vom Zeitstempel abgezogen. Die minimale Verarbeitungszeit entspricht der Zeit, die ein Datenpaket mindestens zur Übertragung vom Sensor zur Verarbeitungseinheit benötigt. Auf diese Weise kann der tatsächliche Messzeitpunkt des Sensors noch besser geschätzt werden. Gerade bei Verwendung eines adaptierten Zeitstempels ergibt sich häufig die Gefahr, dass eine verfrühte Messung eines Sensors oder eine zu kurz geschätzte Zykluszeit des Sensors beim Einschwingen (gemäß den oben mit Bezug auf Fig. 2 und 3 dargestellten zwei Problemen) zu einem adaptierten Zeitstempel führt, der vor dem tatsächlichen Messzeitpunkt des Sensors liegt. Insbesondere bei der Verwendung dieses adaptierten Zeitstempels ist deshalb eine Korrekturmöglichkeit hin zu einer späteren Platzierung (bezogen auf die tatsächlichen zyklischen Messzeitpunkte des Sensors) wichtig.

In einer Weiterbildung umfasst die Gruppe von Datenpaketen Datenpakete, die nach einem Datenpaket liegen, basierend auf dessen Ankunftszeit Zeitstempel zu jedem Datenpaket der Gruppe von vorhergehenden Datenpaketen bestimmt wurden. Es kann also vorgesehen sein, dass die Gruppe von Datenpaketen nur Datenpakete umfasst, die den Anker gemäß dem Verfahren des Standes der Technik nicht neu gesetzt haben. Sobald für ein Datenpaket eine Ankunftszeit gemessen wird, die vor ihrem zugewiesenen Zeitstempel liegt, wird der Anker auf diese Ankunftszeit neu gesetzt und die Gruppe der Datenpakete zurückgesetzt, so dass keine Datenpakete mehr enthalten sind. Erst weitere nachfolgende Datenpakete werden der Gruppe zugeordnet. Ebenso kann vorgesehen sein, dass einer neuen und weiteren Gruppe von Datenpaketen nur Datenpakete umfasst, deren Ankunftszeit nach der Ankunftszeit des betrachteten Datenpakets liegt, wenn diesem ein Zeitstempel unter Berücksichtigung des kleinsten Zeitunterschiedes zugewiesen wurde.

Es kann vorgesehen sein, dass die Gruppe von Datenpaketen eine Mindestanzahl von Datenpaketen umfasst. Dies kann bedeuten, dass die letzten zwei Schritte des Verfahrens (Bestimmen des kleinsten Zeitunterschiedes und Zuweisen eines Zeitstempels zu dem betrachteten Datenpaket) erst dann ausgeführt wird, wenn eine minimale Anzahl von Datenpaketen in der Gruppe vorhanden ist. Dies kann bedeuten, dass nach einem neuen Setzen eines Ankers zunächst eine Mindestanzahl an Datenpaketen empfangen werden muss, die keinen früheren Anker setzen, bevor der Anker zu einem im Vergleich zum Zeitzyklus des Sensors späteren Anker verschoben wird. Dies kann eine sinnvolle Voraussetzung darstellen: Erst wenn der frühe Anker auch nicht durch Ankunftszeiten einer großen Gruppe von weiteren Datenpaketen bestätigt wird, wird der Anker auf den "nächstspäteren" Zeitpunkt (Ankunftszeit) verschoben. Nur in diesem Fall scheint es sich um einen "Ausreißer" beziehungsweise einen während des Einschwingens zu früh gesetzten Anker zu handeln.

In einer Detaillierung wird das Zuweisen eines Zeitstempels für jedes Datenpaket aus der Gruppe von Datenpaketen einzeln und nacheinander ausgeführt; und das Zuweisen umfasst: Schätzen der Zykluszeit des Sensors basierend auf der Zeit zwischen den Ankunftszeiten von Datenpaketen, insbesondere je zwei aufeinanderfolgenden Datenpaketen, für ein Datenpaket aus der Gruppe von Datenpaketen; Bestimmen des Zeitstempels für das Datenpaket aus der Gruppe von Datenpaketen basierend auf der Ankunftszeit eines dem Datenpaket aus der Gruppe von Datenpaketen vorhergehend empfangenen Datenpakets und der geschätzten Zykluszeit, wobei das vorhergehend empfangene Datenpaket insbesondere in der Gruppe umfasst ist oder ein dem zeitlich zuerst empfangenen Datenpaket der Gruppe vorangeht; Prüfen, ob die Ankunftszeit für das Datenpaket aus der Gruppe von Datenpaketen vor dem für dieses bestimmten Zeitstempel liegt; Falls die Ankunftszeit vor dem Zeitstempel liegt: Festlegen des Zeitstempels auf die Ankunftszeit, und Bestimmen der Zeitstempel nachfolgend empfangener Datenpakete aus der Gruppe von Datenpaketen basierend auf der Ankunftszeit. Wie oben bereits erwähnt werden somit die Zeitstempel mit dem Eingang der Datenpakete bei der zentralen Verarbeitungseinheit vergeben. Die geschätzte Zykluszeit kann ein arithmetischer, geometrischer oder laufender Mittelwert sein oder auch durch einen im Stand der Technik bekannten Kalmanfilter geschätzt werden.

In einer anderen Weiterbildung kann vorgesehen sein, dass bevor das oben dargestellten Verfahren ausgeführt wird, der Zeitstempel für das betrachtete Datenpaket zugewiesen wird. Nur, wenn die Ankunftszeit später liegt als der Zeitstempel (und damit der Anker nicht neu bestimmt wird) wird dann das Verfahren ausgeführt. Mit anderen Worten, das Verfahren umfasst weiterhin: Zuweisen eines Zeitstempels zu dem betrachteten Datenpaket basierend auf der Ankunftszeit eines dem betrachteten Datenpaket vorhergehenden Datenpakets; Prüfen, ob die Ankunftszeit des betrachteten Datenpakets nach dem zugewiesenen Zeitstempel liegt; Falls die Ankunftszeit des betrachteten Datenpakets nach dem zugewiesenen Zeitstempel liegt: Ausführen der Schritte eines der vorstehenden Verfahren gemäß dem ersten Aspekt.

In einem anderen Aspekt umfasst eine Vorrichtung eine elektronische Recheneinheit (hierin auch Verarbeitungseinheit genannt), die dazu eingerichtet ist, ein Verfahren nach einem der vorstehend vorgestellten Verfahren auszuführen. Die elektronische Recheneinheit kann ein Mikrocontroller, ein Computer oder dedizierte Schaltkreise sein, gegebenenfalls mit den benötigten Schnittstellen. Die Recheneinheit kann programmtechnisch einrichtbar sein. In einem weiteren Aspekt umfasst ein Kraftfahrzeug eine solche Vorrichtung.

In einem weiteren Aspekt umfasst ein Computerprogramm Anweisungen zum Ausführen eines der oben vorgestellten Verfahren. Die Anweisungen des Computerprogramms können einen Computer dazu veranlassen die Schritte eines der oben dargestellten Verfahren auszuführen.

KURZE BESCHREIBUNG DER ZEICHNUNGEN

Fig. 1 zeigt das Schema zur Zuweisung eines Zeitstempels zu empfangenen Datenpaketen.

Fig. 2 und 3 zeigen schematisch das Entstehen von Fehlern bei der Bestimmung eines Zeitstempels gemäß dem in Bezug auf Fig. 1 erläuterten Schema.

Fig. 4 zeigt ein Flussdiagramm zur Ausführung der Erfindung gemäß einem Ausführungsbeispiel.

Fig. 5 zeigt ein Flussdiagramm zur Ausführung der Erfindung gemäß einem Ausführungsbeispiel.

Fig. 6 zeigt ein Flussdiagramm zum Zuweisen eines adaptierten Zeitstempels, wie es in einem Ausführungsbeispiel verwendet werden kann.

Fig. 7 zeigt ein Flussdiagramm zum Schätzen der Zykluszeit, wie es in einem Ausführungsbeispiel verwendet werden kann.

Gleiche Bezugszeichen oder Formelzeichen beziehen sich auf sich entsprechende Elemente über die Figuren hinweg.

DETAILLIERTE BESCHREIBUNG DER AUSFÜHRUNGSBEISPIELE

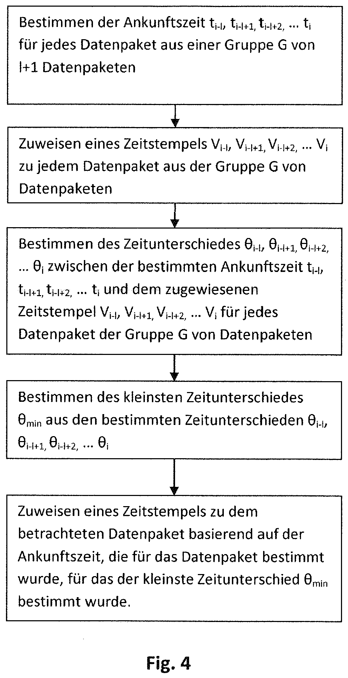

Fig. 4 zeigt ein Flussdiagramm zur Ausführung der Erfindung gemäß einem Ausführungsbeispiel zum Zuweisen eines Zeitstempels zu dem betrachteten Datenpaket. Das betrachtete Datenpaket kann Teil einer Gruppe G von Datenpaketen sein. Hier soll davon ausgegangen werden, dass das zuletzt empfangene Datenpaket $i$ Teil der Gruppe G ist. Es ist aber auch denkbar, dass das Datenpaket $i$ nicht Teil der Gruppe G ist und beispielsweise nach dem letzt-empfangenen Datenpaket der Gruppe G empfangen wird. Zunächst wird die Ankunftszeit $t_{i-l}$, $t_{i-l+1}$, $t_{i-l+2}$, ... $t_i$ für jedes Datenpaket aus einer Gruppe G von l+1 Datenpaketen bestimmt. Diesen werden die Zeitstempel $V_{i-1}$, $V_{i-l+1}$, $V_{i-l+2}$, ... $V_i$ zugewiesen und die Zeitunterschiede $\theta_{i-l}$, $\theta_{i-l+1}$, $\theta_{i-l+2}$, ... $\theta_i$ zwischen der bestimmten Ankunftszeit $t_{i-l}$, $t_{i-1+1}$, $t_{i-1+2}$, ... $t_i$ und dem zugewiesenen Zeitstempel $V_{i-l}$, $V_{i-l+1}$, $V_{i-l+2}$, ... $V_i$ für jedes Datenpaket der Gruppe G bestimmt. Es wird der kleinste Zeitunterschied $\theta_{min}$ aus den bestimmten Zeitunterschieden $\theta_{i-l}$, $\theta_{i-l+1}$, $\theta_{i-l+2}$, ... $\theta_i$ bestimmt. Vorzugsweise wird die Gruppe der Datenpakete derart gewählt, dass nur Datenpakete, die nach einem Datenpaket empfangen werden, aufgrund dessen Ankunftszeit ein Anker gesetzt wurde, in der Gruppe enthalten sind. Dies kann insbesondere bedeuten, dass die Zeitunterschiede alle größer Null sind. Schließlich wird dem betrachteten Datenpaket erneut ein Zeitstempel zugewiesen, basierend auf der Ankunftszeit, die für das Datenpaket bestimmt wurde, für das der kleinste Zeitunterschied $\theta_{min}$ bestimmt wurde. Diese Ankunftszeit kann auch als neuer Anker zum Zuweisen von Zeitstempeln $V_{i+1}$, $V_{i+2}$ dienen.

In einer denkbaren Variante kann die Gruppe auch so gewählt, oder belassen werden, dass negative Zeitunterschiede umfasst sind. In diesem Fall ist der kleinste Zeitunterschied der negative Zeitunterschied mit dem größten Betrag.

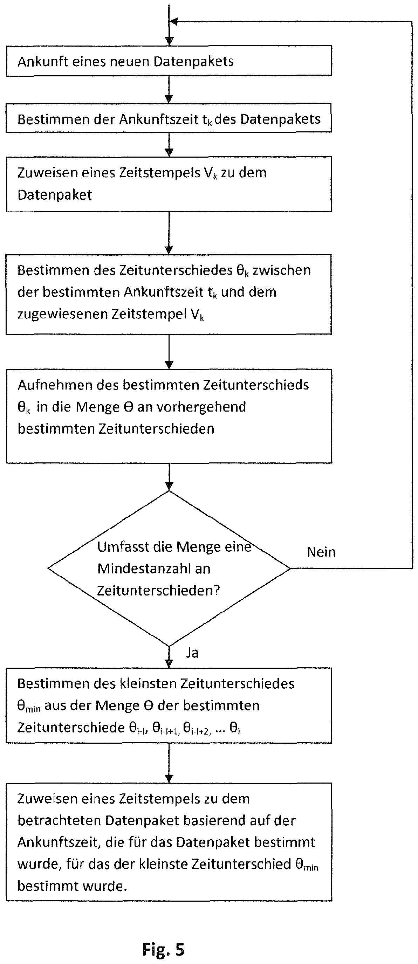

Fig. 5 zeigt ein Flussdiagramm zur Ausführung der Erfindung gemäß einem Ausführungsbeispiel. In diesem Beispiel werden die Schritte bis auf die letzten beiden für jedes empfangene Datenpaket einzeln ausgeführt. Sind die für jedes Datenpaket einzeln ausgeführten Schritte für alle Datenpakete der Gruppe ausgeführt, so bedeutet dies, dass die Ankunftszeiten für jedes Datenpaket der Gruppe bestimmt und die Zeitstempel für jedes Datenpaket der Gruppe zugewiesen sind.

Nach der Ankunft eines neuen Datenpakets wird für jedes empfangene Datenpaket k wird die Ankunftszeit $t_k$ bestimmt und diesem ein Zeitstempel $V_k$ zugewiesen sowie der Zeitunterschied $\theta_k$ bestimmt und in eine Menge $\theta$ aufgenommen. Sobald die Menge eine Mindestanzahl an Elementen umfasst, meist eine größere Anzahl, wird der kleinste Zeitunterschied bestimmt. Schließlich wird dem betrachteten Datenpaket ein Zeitstempel zugewiesen basierend auf der Ankunftszeit, die für das Datenpaket bestimmt wurde, für das der kleinste Zeitunterschied $\theta_{min}$ bestimmt wurde. Auch hier gilt wieder, dass, wenn ein empfangenes Datenpaket den Anker verschiebt, die Menge $\theta$ auf die leere Menge zurückgesetzt werden kann. Dies kann ebenfalls dann vorgesehen sein, wenn der letzte Schritt des Verfahrens ausgeführt wird. Mit anderen Worten: Die Menge $\theta$ umfasst nur Zeitunterschiede für Datenpakete, die den Anker nicht verschoben haben (deren Ankunftszeit also nicht vor dem ursprünglich zugewiesenen Zeitstempel liegt).

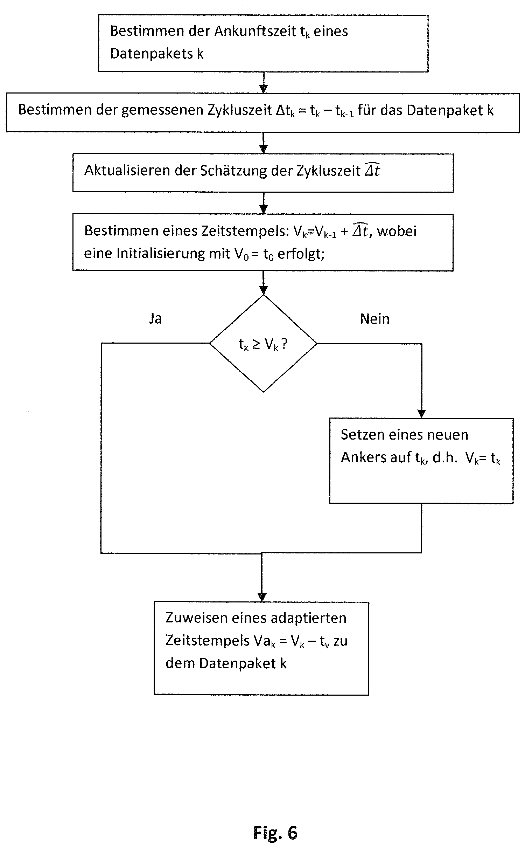

Fig. 6 zeigt ein Flussdiagramm zum Zuweisen eines Zeitstempels und eines adaptierten Zeitstempels, wie es in einem Ausführungsbeispiel verwendet werden kann und damit Teil eines Ausführungsbeispiels sein kann. In dem hier dargestellten Ablauf werden für die empfangenen Datenpakete der Gruppe von Datenpaketen einzeln Ankunftszeiten bestimmt und Zeitstempel sowie adaptierte Zeitstempel zugewiesen. Sobald die Schritte für jedes Datenpaket der Gruppe von Datenpaketen ausgeführt sind, sind für jedes Datenpakete der Gruppe die Ankunftszeiten bestimmt und die Zeitstempel und adaptierten Zeitstempel zugewiesen.

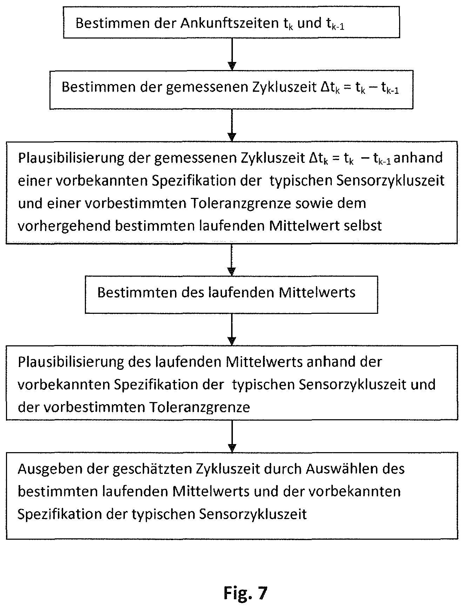

Es wird damit begonnen, die Ankunftszeit $t_k$ eines Datenpakets k zu bestimmen. Daraufhin wird die gemessene Zykluszeit $\Delta t_k = t_k - t_{k-1}$ für das Datenpaket k bestimmt. Aufbauend auf diesem wird die Schätzung der Zykluszeit $\widehat{\Delta t}$ aktualisiert. Die Schätzung der Zykluszeit kann als ein laufender Mittelwert ausgeführt werden, wie beispielsweise mit Bezug auf Fig. 7 dargestellt. Nachfolgend wird diese Zykluszeit benutzt um einen Zeitstempel $V_k$ für das Datenpaket festzulegen gemäß der Formel

$$V_k = V_{k-1} + \widehat{\Delta t},$$ die mit $V_0 = t_0$ initialisiert wird. An dieser Stelle wird überprüft, ob der Zeitstempel $V_k$ nach der Ankunftszeit $t_k$ liegt. Ist dies der Fall, so wird dem Datenpaket der adaptierte Zeitstempel $Va_k = V_k - t_v$ zugewiesen. Liegt die Ankunftszeit $t_k$ vor dem Zeitstempel $V_k$, so wird diese Ankunftszeit zu einem neuen Anker und der Zeitstempel $V_k$ auf $t_k$ gesetzt. Ausgehend von diesem wird dann ebenfalls der adaptierte Zeitstempel $Va_k = V_k - t_v$ zugewiesen.

In diesem Beispiel unterscheidet sich der Zeitstempel $V_k$ vom adaptierten Zeitstempel $Va_k$ dadurch, dass noch eine Verarbeitungszeit $t_v$ vom Zeitstempel $V_k$ abgezogen wird. Diese Vorgehensweise basiert auf dem Modell, dass ausgehend vom tatsächlichen Messzeitpunkt des Sensors eine minimale und nicht unterschreitbare Verarbeitungszeit $t_v$ die Ankunftszeit des Datenpakets mit den Sensorinformationen verzögert. Die Zeit, zu der das Datenpaket dann tatsächlich bei der Verarbeitungseinheit ankommt, ist darüber hinaus noch um eine gewisse zufällige Zeit länger, den sogenannten Jitter. Der Jitter ist eine zufällige Zeitverzögerung größer Null. Durch die Berücksichtigung der Verarbeitungszeit $t_v$ kann der adaptierte Zeitstempel den tatsächlichen Messzeitpunkt des Sensors verbessert schätzen. Die Verarbeitungszeit $t_v$ kann durch im Stand der Technik bekannte Verfahren, wie eine Laufzeitmessung unter Idealbedingungen oder Versuchsreihen bestimmt werden. Die Modellannahme für die bestimmte Ankunftszeit $t_k$ ist somit der tatsächliche Zeitpunkt der Sensormessung, die zum Datenpaket k gehört, + $t_v$ +$j_k$, wobei $j_k$ den Jitter für das Datenpaket k beschreibt. Mit anderen Worten: Die Modellannahme für die bestimmte Ankunftszeit ist, dass das Datenpaket um die Verarbeitungszeit und den Jitter später ankommt als der tatsächliche Zeitpunkt der Sensormessung.

Fig. 7 zeigt ein Flussdiagramm zum Schätzen der Zykluszeit, wie es in einem Ausführungsbeispiel verwendet werden kann und damit Teil eines Ausführungsbeispiels sein kann. Zunächst werden gegebenenfalls durch Messung die Ankunftszeiten $t_k$ und $t_{k-1}$ von zwei

aufeinanderfolgenden Datenpaketen k und k-1 bestimmt, deren Differenz die gemessene Zykluszeit $\Delta t_k = t_k - t_{k-1}$ darstellt. Diese gemessene Zykluszeit wird anhand einer vorbekannten Spezifikation der typischen Sensorzykluszeit (beispielsweise eine gespeicherte Angabe des Sensorherstellers) und einer vorbestimmten Toleranzgrenze (beispielsweise in einer Konfigurationsdatei gespeichert) sowie dem vorhergehend bestimmten laufenden Mittelwert selbst plausibilisiert. Falls die gemessene Zykluszeit für nicht plausibel befunden wird, kann die vorbestimmte Spezifikation oder der vorhergehend berechnete Mittelwert ausgegeben werden. Wird die gemessene Zykluszeit für plausibel befunden, so wird der laufende Mittelwert bestimmt. Dies kann über die Formel $\widehat{\Delta t_k} = \left(1 - \frac{1}{n}\right)\widehat{\Delta t_{k-1}} + \frac{1}{n}\Delta t_k$ berechnet werden, wobei n das Minimum aus einem vorgegebenen Wert N und k sein kann (k ist die absolute Zählung der empfangenen Datenpakete). Anschließend wird der laufende Mittelwert anhand der vorbekannten Spezifikation der typischen Sensorzykluszeit und der vorbestimmten Toleranzgrenze plausibilisiert. Falls der Mittelwert für nicht plausibel befunden wird, wird die vorbestimmte Spezifikation ausgegeben. Falls der Mittelwert plausibel ist, wird dieser ausgegeben.

**Patentansprüche**

1. Verfahren zum Zuweisen eines Zeitstempels zu einem betrachteten Datenpaket, das ebenso wie eine Gruppe empfangener Datenpakete von einem zyklisch arbeitenden und Datenpakete sendenden Sensor empfangen wird, wobei das betrachtete Datenpaket insbesondere in der Gruppe empfangener Datenpakete umfasst ist, umfassend:

   Bestimmen der Ankunftszeit für jedes Datenpaket der Gruppe von empfangenen Datenpaketen;
   Zuweisen eines Zeitstempels zu jedem Datenpaket der Gruppe von Datenpaketen;
   Bestimmen des Zeitunterschiedes zwischen der bestimmten Ankunftszeit und dem zugewiesenen Zeitstempel für jedes Datenpaket der Gruppe von Datenpaketen;
   **gekennzeichnet durch**:

   Bestimmen des kleinsten Zeitunterschiedes aus den bestimmten Zeitunterschieden;
   Zuweisen eines Zeitstempels zu dem betrachteten Datenpaket basierend auf der Ankunftszeit, die für das Datenpaket bestimmt wurde, für das der kleinste Zeitunterschied bestimmt wurde und einer geschätzten Zykluszeit des Sensors.

2. Verfahren nach Anspruch 1, wobei die Ankunftszeit jedes Datenpakets der Gruppe von Datenpaketen später liegt als der jeweils zugewiesene Zeitstempel.

3. Verfahren nach Anspruch 1, wobei die Gruppe von Datenpaketen, Datenpakete umfasst, die nach einem Datenpaket empfangen wurden, basierend auf dessen Ankunftszeit Zeitstempel zu jedem Datenpaket der Gruppe von Datenpaketen bestimmt wurden.

4. Verfahren nach einem der vorhergehenden Ansprüche, wobei die Gruppe eine Mindestanzahl von Datenpaketen umfasst, und/oder wobei das betrachtete Datenpaket in der Gruppe von Datenpaketen mit umfasst ist, oder später als das zuletzt empfangene Datenpaket der Gruppe empfangen wird.

5. Verfahren nach einem der vorhergehenden Ansprüche,
   wobei das Zuweisen eines Zeitstempels für jedes Datenpaket aus der Gruppe von Datenpaketen einzeln und nacheinander ausgeführt wird; und wobei das Zuweisen umfasst:

   Schätzen der Zykluszeit des Sensors basierend auf der Zeit zwischen den Ankunftszeiten von Datenpaketen, insbesondere je zwei aufeinanderfolgenden Datenpaketen, für ein Datenpaket aus der Gruppe von Datenpaketen;
   Bestimmen des Zeitstempels für ein Datenpaket aus der Gruppe von Datenpaketen basierend auf der Ankunftszeit eines dem Datenpaket aus der Gruppe von Datenpaketen vorhergehend empfangenen Datenpakets und der geschätzten Zykluszeit, wobei das vorhergehend empfangene Datenpaket insbesondere in der Gruppe umfasst ist oder ein dem zeitlich zuerst empfangenen Datenpaket der Gruppe vorangeht;
   Prüfen, ob die Ankunftszeit für das Datenpaket aus der Gruppe von Datenpaketen vor dem für dieses bestimmten Zeitstempel liegt;
   Falls die Ankunftszeit vor dem Zeitstempel liegt:

   Festlegen des Zeitstempels auf die Ankunftszeit, und
   Bestimmen der Zeitstempel nachfolgend empfangener Datenpakete aus der Gruppe von Datenpaketen basierend auf der Ankunftszeit.

6. Verfahren nach Anspruch 5, wobei die geschätzte Zykluszeit ein arithmetischer, geometrischer oder laufender Mittelwert ist.

7. Verfahren nach einem der vorhergehenden Ansprüche ferner umfassend:

Zuweisen eines Zeitstempels zu dem betrachteten Datenpaket basierend auf der Ankunftszeit eines dem betrachteten Datenpaket vorhergehenden Datenpakets;

Prüfen, ob die Ankunftszeit des betrachteten Datenpakets nach dem zugewiesenen Zeitstempel liegt;

Falls die Ankunftszeit des betrachteten Datenpakets nach dem zugewiesenen Zeitstempel liegt: Ausführen der Schritte eines der Verfahren nach den Ansprüchen 1 bis 6.

8. Vorrichtung, umfassend eine elektronische Recheneinheit, die dazu eingerichtet ist, ein Verfahren nach einem der vorhergehenden Ansprüche auszuführen.

9. Kraftfahrzeug, umfassend eine Vorrichtung nach Anspruch 8.

10. Computerprogramm, umfassend Anweisungen, die bei der Ausführung durch einen Computer diesen veranlassen, das Verfahren nach einem der Ansprüche 1-7 auszuführen.

**Claims**

1. Method for assigning a time stamp to a specific data packet which, just like a group of received data packets, is received from a cyclically operating sensor which transmits data packets, wherein the specific data packet is in particular part of the group of received data packets, the method comprising:

   determining the time of arrival for each data packet in the group of received data packets;
   assigning a time stamp to each data packet in the group of data packets;
   determining the time difference between the determined time of arrival and the assigned time stamp for each data packet in the group of data packets;
   **characterized by**
   determining the smallest time difference from the determined time differences;
   assigning a time stamp to the specific data packet on the basis of the time of arrival, which was determined for the data packet for which the smallest time difference was determined, and an estimated cycle time of the sensor.

2. Method according to Claim 1, wherein the time of arrival of each data packet in the group of data packets is later than the respectively assigned time stamp.

3. Method according to Claim 1, wherein the group of data packets comprises data packets which have been received after a data packet, on the basis of the time of arrival of which time stamps were determined for each data packet in the group of data packets.

4. Method according to any of the preceding claims, wherein the group comprises a minimum number of data packets, and/or wherein the specific data packet is included in the group of data packets, or is received later than the last-received data packet in the group.

5. Method according to any of the preceding claims, wherein the assignment of a time stamp for each data packet from the group of data packets is performed individually and successively; and wherein the assignment comprises:

   estimating the cycle time of the sensor on the basis of the time between the times of arrival of data packets, in particular in each case two successive data packets, for a data packet from the group of data packets;
   determining the time stamp for a data packet from the group of data packets on the basis of the time of arrival of a data packet received prior to the data packet from the group of data packets and of the estimated cycle time, wherein the previously received data packet is included, in particular, in the group or precedes the data packet in the group which was received first in terms of time;
   checking whether the time of arrival for the data packet from the group of data packets is before the time stamp determined for said data packet;
   if the time of arrival is before the time stamp:

      fixing the time stamp to the time of arrival, and
      determining the time stamps of subsequently received data packets from the group of data packets on the basis of the time of arrival.

6. Method according to Claim 5, wherein the estimated cycle time is an arithmetic, geometric or running average.

7. Method according to any of the preceding claims, also comprising:

   assigning a time stamp to the specific data packet on the basis of the time of arrival of a data packet preceding the specific data packet;
   checking whether the time of arrival of the specific data packet is after the assigned time stamp;

if the time of arrival of the specific data packet is after the assigned time stamp: performing the steps of one of the methods according to Claims 1 to 6.

8. Device comprising an electronic calculating unit which is set up to perform a method according to any of the preceding claims.

9. Motor vehicle comprising a device according to Claim 8.

10. Computer program comprising instructions which, during execution by a computer, cause the latter to perform the method according to one of Claims 1-7.

**Revendications**

1. Procédé d'attribution d'un horodatage à un paquet de données considéré qui est reçu, tout comme un groupe de paquets de données reçus, par un capteur à fonctionnement cyclique et émettant des paquets de données, dans lequel le paquet de données considéré fait notamment partie du groupe de paquets de données reçus, consistant à :

déterminer le temps d'arrivée de chaque paquet de données du groupe de paquets de données reçus ;
attribuer un horodatage à chaque paquet de données du groupe de paquets de données ;
déterminer la différence temporelle entre le temps d'arrivée déterminé et l'horodatage attribué pour chaque paquet de données du groupe de paquets de données ;
**caractérisé par** le fait de :

déterminer la plus petite différence temporelle parmi les différences temporelles déterminées ;
attribuer un horodatage au paquet de données considéré en fonction du temps d'arrivée qui a été déterminé pour le paquet de données pour lequel la plus petite différence temporelle a été déterminée et d'un temps de cycle estimé du capteur.

2. Procédé selon la revendication 1, dans lequel le temps d'arrivée de chaque paquet de données du groupe de paquets de données est postérieur à l'horodatage respectivement attribué.

3. Procédé selon la revendication 1, dans lequel le groupe de paquets de données comprend des paquets de données qui ont été reçus après un paquet de données, en fonction du temps d'arrivée duquel des horodatages ont été déterminés pour chaque paquet de données du groupe de paquets de données.

4. Procédé selon l'une des revendications précédentes, dans lequel le groupe comprend un nombre minimum de paquets de données, et/ou dans lequel le paquet de données considéré fait partie du groupe de paquets de données, ou est reçu ultérieurement en tant que dernier paquet de données reçu en dernier du groupe.

5. Procédé selon l'une des revendications précédentes, dans lequel l'attribution d'un horodatage est effectuée individuellement et séquentiellement pour chaque paquet de données du groupe de paquets de données ; et dans lequel l'attribution consiste à :

estimer le temps de cycle du capteur en fonction du temps entre les temps d'arrivée de paquets de données, en particulier de deux paquets de données successifs pour un paquet de données provenant du groupe de paquets de données ;
déterminer l'horodatage pour un paquet de données provenant du groupe de paquets de données en fonction du temps d'arrivée d'un paquet de données reçu avant le paquet de données provenant du groupe de paquets de données et en fonction du temps de cycle estimé, dans lequel le paquet de données reçu précédemment fait notamment partie du groupe ou précède un paquet de données du groupe reçu en premier dans le temps ;
vérifier si le temps d'arrivée du paquet de données provenant du groupe de paquets de données est antérieur à l'horodatage déterminé pour celui-ci ;
si le temps d'arrivée est antérieure à l'horodatage :

régler l'horodatage au temps d'arrivée, et déterminer l'horodatage de paquets de données reçus ultérieurement en provenance du groupe de paquets de données en fonction du temps d'arrivée.

6. Procédé selon la revendication 5, dans lequel le temps de cycle estimé est une moyenne arithmétique, géométrique ou glissante.

7. Procédé selon l'une des revendications précédentes, consistant en outre à :

attribuer un horodatage au paquet de données considéré en fonction du temps d'arrivée d'un paquet de données précédant le paquet de données considéré ;
vérifier si le temps d'arrivée du paquet de données considéré est postérieur à l'horodatage attribué ;
si le temps d'arrivée du paquet de données considéré est postérieur à l'horodatage attribué : exécuter les étapes de l'un des procédés selon les revendications 1 à 6.

8. Dispositif comprenant une unité de calcul électronique conçue pour mettre en œuvre un procédé selon l'une des revendications précédentes.

9. Véhicule automobile comportant un dispositif selon la revendication 8.

10. Programme informatique comprenant des instructions qui, lorsqu'elles sont exécutées par un ordinateur, font en sorte que l'ordinateur mette en œuvre le procédé selon l'une des revendications 1 à 7.

**Fig. 1**

**Fig. 2**

**Fig. 3**

Bestimmen der Ankunftszeit $t_{i-l}$, $t_{i-l+1}$, $t_{i-l+2}$, ... $t_i$ für jedes Datenpaket aus einer Gruppe G von l+1 Datenpaketen

↓

Zuweisen eines Zeitstempels $V_{i-l}$, $V_{i-l+1}$, $V_{i-l+2}$, ... $V_i$ zu jedem Datenpaket aus der Gruppe G von Datenpaketen

↓

Bestimmen des Zeitunterschiedes $\theta_{i-l}$, $\theta_{i-l+1}$, $\theta_{i-l+2}$, ... $\theta_i$ zwischen der bestimmten Ankunftszeit $t_{i-l}$, $t_{i-l+1}$, $t_{i-l+2}$, ... $t_i$ und dem zugewiesenen Zeitstempel $V_{i-l}$, $V_{i-l+1}$, $V_{i-l+2}$, ... $V_i$ für jedes Datenpaket der Gruppe G von Datenpaketen

↓

Bestimmen des kleinsten Zeitunterschiedes $\theta_{min}$ aus den bestimmten Zeitunterschieden $\theta_{i-l}$, $\theta_{i-l+1}$, $\theta_{i-l+2}$, ... $\theta_i$

↓

Zuweisen eines Zeitstempels zu dem betrachteten Datenpaket basierend auf der Ankunftszeit, die für das Datenpaket bestimmt wurde, für das der kleinste Zeitunterschied $\theta_{min}$ bestimmt wurde.

**Fig. 4**

Fig. 5

Bestimmen der Ankunftszeit $t_k$ eines Datenpakets k

Bestimmen der gemessenen Zykluszeit $\Delta t_k = t_k - t_{k-1}$ für das Datenpaket k

Aktualisieren der Schätzung der Zykluszeit $\widehat{\Delta t}$

Bestimmen eines Zeitstempels: $V_k = V_{k-1} + \widehat{\Delta t}$, wobei eine Initialisierung mit $V_0 = t_0$ erfolgt;

Ja

Nein

$t_k \geq V_k$ ?

Setzen eines neuen Ankers auf $t_k$, d.h. $V_k = t_k$

Zuweisen eines adaptierten Zeitstempels $Va_k = V_k - t_v$ zu dem Datenpaket k

**Fig. 6**

Bestimmen der Ankunftszeiten $t_k$ und $t_{k-1}$

Bestimmen der gemessenen Zykluszeit $\Delta t_k = t_k - t_{k-1}$

Plausibilisierung der gemessenen Zykluszeit $\Delta t_k = t_k - t_{k-1}$ anhand einer vorbekannten Spezifikation der typischen Sensorzykluszeit und einer vorbestimmten Toleranzgrenze sowie dem vorhergehend bestimmten laufenden Mittelwert selbst

Bestimmten des laufenden Mittelwerts

Plausibilisierung des laufenden Mittelwerts anhand der vorbekannten Spezifikation der typischen Sensorzykluszeit und der vorbestimmten Toleranzgrenze

Ausgeben der geschätzten Zykluszeit durch Auswählen des bestimmten laufenden Mittelwerts und der vorbekannten Spezifikation der typischen Sensorzykluszeit

**Fig. 7**

**IN DER BESCHREIBUNG AUFGEFÜHRTE DOKUMENTE**

**In der Beschreibung aufgeführte Patentdokumente**

- US 6839659 B2, TARASSENKO LIONEL

**In der Beschreibung aufgeführte Nicht-Patentliteratur**

- Precise Timestamping and Temporal Sychronization in Multi-Sensor Fusion. **TOBIAS HUCK et al.** Intelligent Vehicles Symposium (IV). IEEE, 2011, 242-247